# EUROPEAN PATENT APPLICATION

(11) **EP 4 703 454 A1**
(43) Date of publication of application: **04.03.2026**
(21) Application number: 24796998.3
(22) Date of filing: 23.04.2024
(51) Int. Cl.: C09K 11/80, C09K 11/00, C09K 11/08, G01T 1/20

(54) **CERAMIC SCINTILLATOR, PHOTON COUNTING TYPE X-RAY DETECTOR, AND METHOD FOR MANUFACTURING CERAMIC SCINTILLATOR**

(30) Priority: 25.04.2023 JP 2023071498
(71) Applicant: Niterra Materials Co., Ltd., Yokohama-shi, Kanagawa 235-0032 (JP)
(72) Inventor: USUI, Daichi, Yokohama-shi, Kanagawa 235-0032 (JP); TAGUCHI, Seina, Yokohama-shi, Kanagawa 235-0032 (JP)
(74) Representative: Hoffmann Eitle
(86) International application number: PCT/JP2024/015837
(87) International publication number: WO 2024/225252

(57) **Abstract**

In a ceramic scintillator formed of a garnet compound containing Pr, according to an embodiment, an absorption rate at a wavelength of 320 [nm] relative to an absorption rate at a wavelength of 280 [nm] is 0.15 or less.

## Description

### TECHNICAL FIELD

An embodiment of the preset invention relates to a ceramic scintillator, a photon-counting type X-ray detector, and a method for producing the ceramic scintillator.

### BACKGROUND ART

Imaging systems using radiation, for example, X-rays are widely used in industrial applications such as baggage inspection and nondestructive inspection, and in medical applications such as X-ray diagnostic equipment and X-ray CT (Computed Tomography) equipment. Current mainstream detection methods in imaging systems using X-rays are of an energy integration type, and generally have a configuration in which a light-emitting material and a photodetector are combined.

However, the energy integration type has problems that X-ray energy information cannot be obtained and that the exposure dose is large. In recent years, in order to solve these problems, development of X-ray detectors employing a photon-counting method has been advanced. Photon-counting type X-ray detectors are also called photon detectors or photon-counting type detectors.

The photon-counting method is characterized in that pulse signal processing is performed for incident X-ray photons one by one. Photon-counting methods are classified into a direct type that uses a semiconductor such as CdTe to convert X-rays directly into electrical signals, and an indirect type that converts X-rays into light with a light-emitting material and converts the light into electrical signals using a photodetector.

Among the photon counting methods, the direct type can measure X-ray photon energy from the number of carriers, the indirect type can measure the X-ray photon energy from the number of emission photons, and since it is easy to remove noise components, data with a high S/N ratio can be obtained. Due to these advantages, realization of new functional diagnoses and reduction of exposure dose due to low dose measurement are expected in medical applications. The mainstream of research and development in the photon-counting method is the direct type that can obtain high energy resolution. However, the problems of the direct type are high cost of semiconductor materials such as CdTe, difficulty of manufacturing large-area detectors due to difficulty of obtaining uniform characteristics, and signal pile-up phenomenon due to slow response speed of the materials.

On the other hand, in the photodetectors of the indirect type among the photon-counting methods, photoelectron multiplier tubes having high multiplication factors are generally used. However, the indirect type has problems that the shape of the photoelectron multiplier tube is large and that pixel configuration with a narrow gap is difficult. A silicon photomultiplier (Si-PM) that is a Si-based photodetector that operates in the Geiger mode, and has recently been developed solves the problems of the photoelectron multiplier tube described above, has a multiplication factor close to that of photoelectron multiplier tubes, and is low cost. Therefore, in the indirect type, it is expected that the use of silicon photomultipliers will expand in the future.

### PRIOR ART DOCUMENTS

### PATENT DOCUMENT

Patent Document 1: Japanese Patent Laid-Open No. 2018-2974
Patent Document 2: Japanese Patent Laid-Open No. 2010-235388

### SUMMARY OF THE INVENTION

### PROBLEMS TO BE SOLVED BY THE INVENTION

A common technical problem for both the direct type and the indirect type is that they cannot handle high counting rates. A counting rate indicates the number of X-ray photons incident on a unit area at a unit time, and corresponds to the intensity of the X-rays.

When performing a large amount of imaging by photocounting X-ray measurement in a short period of time, a detector that handles a high counting rate is required. Such a situation is necessary for X-ray CT, and the required counting rate at this time is said to be 10⁸ [cps/mm²] or more. This is equivalent to the X-ray photons being incident on an area of 1 [mm²] at an average interval of 10 [nsec]. When the counting rate exceeds the capacity of the detector, overlapping of the pulse signals occurs, and it becomes difficult to measure the correct X-ray photon energy.

On the other hand, long-term measurement with a suppressed counting rate increases the imaging time, and causes problems such as reduction in throughput and reduction in time resolution. The counting rate that can be handled by the detector is mainly determined by the response speed of the materials, and therefore improvement is expected.

The problem to be solved by the present invention is to provide a ceramic scintillator that can handle with a high counting rate, a photon-counting type X-ray detector, and a method for manufacturing the ceramic scintillator.

### MEANS FOR SOLVING THE PROBLEMS

In a ceramic scintillator formed of a garnet compound containing Pr, according to an embodiment, an absorption rate at a wavelength of 320 [nm] relative to an absorption rate at a wavelength of 280 [nm] is 0.15 or less.

### BRIEF DESCRIPTION OF THE DRAWINGS

[FIG. 1] FIG. 1 is a schematic view illustrating a configuration of a photon-counting type X-ray detector according to an embodiment.
[FIG. 2] FIG. 2 is an enlarged sectional view of a partial region shown in a division (B) of FIG. 1 in the photon counting type X-ray detector according to the embodiment.
[FIG. 3] FIG. 3 is a table showing a relationship between an absorption rate at a wavelength of 320 [nm] relative to an absorption rate at a wavelength of 280 [nm] ("absorption rate at 320 nm" / "absorption rate at 280 nm"), and a relative light yield relative to a relative decay time constant ("relative light yield" / "relative decay time constant") in the examples.
[FIG. 4] FIG. 4 is a graph showing the change in absorption spectrum in the examples.
[FIG. 5] FIG. 5 is a table showing a relationship between an absorption rate at a wavelength of 320 [nm] relative to an absorption rate at a wavelength of 280 [nm] ("absorption rate at 320 nm" / "absorption rate at 280 nm"), and a relative light yield relative to a relative decay time constant ("relative light yield" / "relative decay time constant") in the comparative examples.

### DESCRIPTION OF EMBODIMENTS

Hereinafter, embodiments of a ceramic scintillator, a photon-counting type X-ray detector, and a method for manufacturing the ceramic scintillator will be described in detail with reference to the drawings.

### (Photon-counting Type X-ray Detector)

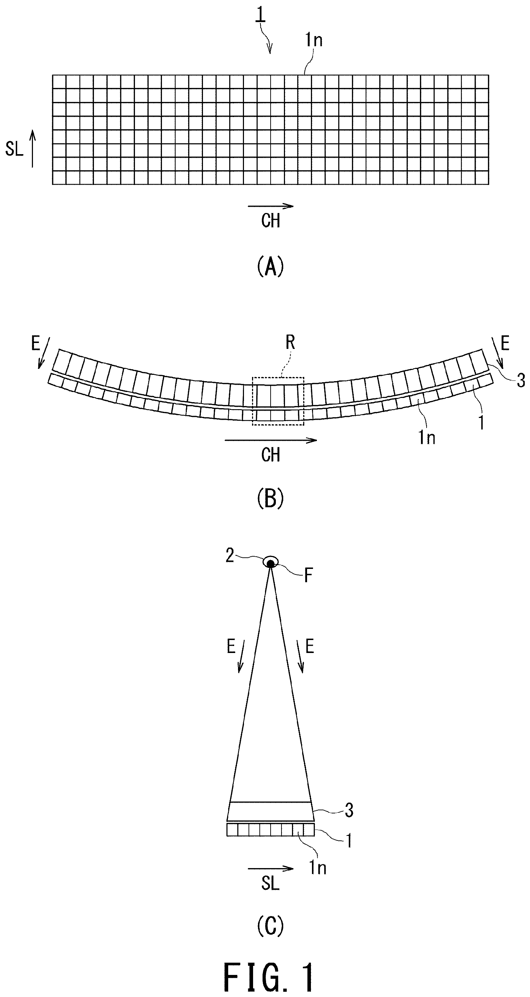

Each of divisions (A) to (C) of FIG. 1 is a schematic view illustrating a configuration of a photon-counting type X-ray detector according to an embodiment. The division (A) of FIG. 1 is a top view of the photon-counting type X-ray detector according to the embodiment. The division (B) of FIG. 1 is a side view illustrating a channel direction CH of the photon-counting type X-ray detector according to the embodiment. The division (C) of FIG. 1 is a side view illustrating a slice direction SL of the photon-counting type X-ray detector according to the embodiment.

Each of the divisions (A) to (C) of FIG. 1 illustrates a photon-counting type X-ray detector (hereinafter, simply referred to as an "X-ray detector") 1 according to the embodiment. Each of the divisions (B) and (C) of FIG. 1 illustrates a collimator device 3 in addition to the X-ray detector 1. The division (C) of FIG. 1 illustrates an X-ray tube 2 in addition to the X-ray detector 1.

The X-ray detector 1 is installed on a rotating frame of a holding device. The X-ray detector 1 is provided with n (n: a plurality) of X-ray detection elements 1n. The X-ray detection elements 1n are arranged two-dimensionally in a matrix form in the channel direction and the slice direction SL. The channel direction means a spread direction of fan beam X-rays emitted from the X-ray tube 2, and the slice direction means a thickness direction of the fan beam X-rays.

An X-ray incident surface of the X-ray detector 1 is formed by X-ray incident surfaces of the X-ray detection elements 1n. For example, about 1000 X-ray detection elements 1n are arranged in the channel direction CH, and 64 X-ray detection elements 1n are arranged in the slice direction SL.

The X-ray tube 2 is installed in a rotating frame of a holding device to face the X-ray detector 1. The X-ray tube 2 is a vacuum tube that generates X-rays by irradiating thermal electrons from a cathode (filament) to an anode (target) by applying a high voltage. For example, among X-ray tubes 2, there is a rotating anode type X-ray tube that generates X-rays by irradiating a rotating anode with thermal electrons.

A collimator device 3 has a plurality of collimator plates having a function of absorbing scattered X-rays. The plurality of collimator plates comprise plates that extend in the slice direction SL and are provided to be erected to divide the X-ray detection elements 1n in the channel direction CH (one-dimensional collimator). Alternatively, the plurality of collimator plates comprise plates that extend in the slice direction SL and are provided to be erected to divide the X-ray detection elements 1n in the channel direction CH, and plates that extend in the channel direction CH and are provided to be erected to divide the X-ray detection elements 1n in the slice direction SL (two-dimensional collimator). An inclination of the plate surface of the collimator plate is adjusted to be parallel to an X-ray irradiation direction E that is a direction in which X-rays from an X-ray focal point F of the X-ray tube 2 are irradiated. The division (C) of FIG. 1 illustrates a case in which the collimator device 3 is a one-dimensional collimator. What is made by combining the collimator device 3 with the X-ray detector 1 is sometimes called a "photon-counting type X-ray detector".

The X-ray detector 1 may be configured by arrangement of a plurality of detector modules by modularizing a predetermined number of X-ray detection elements among the X-ray detection elements 1n. Likewise, the collimator device 3 may be configured by arrangement of a plurality of collimator modules by modularizing a predetermined number of collimator plates.

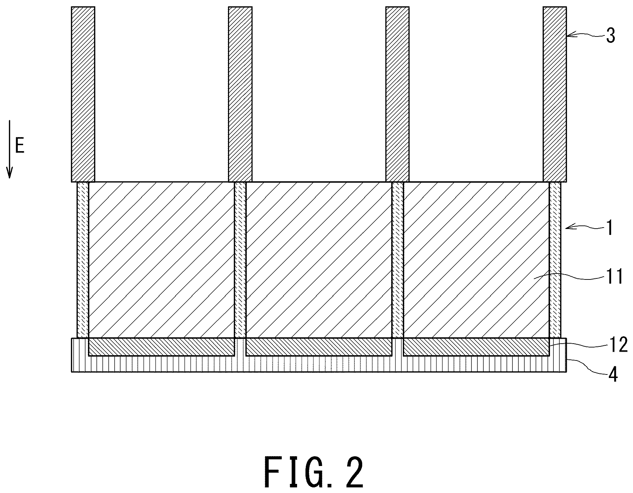

FIG. 2 is an enlarged sectional view of a partial region R illustrated in the division (B) of FIG. 1 in the X-ray detector 1.

The X-ray detection elements 1n are provided on a ceramic substrate 4. Each of the X-ray detection elements 1n includes a ceramic scintillator 11 and a photoelectric conversion element 12.

The ceramic scintillator 11 is an element that converts incident X-rays into photons and emits the photons. Here, X-rays usually have a predetermined X-ray energy distribution. An X-ray having a specific X-ray energy can be considered a mass of X-ray particles a number of which corresponds to a magnitude of the X-ray energy. The ceramic scintillator 11 converts the X-ray particles into photons with a predetermined probability while maintaining a mass of the X-ray particles. When X-rays are incident on the ceramic scintillator 11, the ceramic scintillator 11 emits substantially simultaneously photon groups in number corresponding to the X-ray energy according to X-ray energy.

The ceramic scintillator 11 is a light conversion element having a substantially rectangular parallelepiped or cubic shape. The ceramic scintillator 11 is disposed so that an X-ray incident surface thereof is substantially perpendicular to an X-ray irradiation direction, that is, the X-ray incident direction E, and a side surface parallel to the X-ray incident direction E is substantially parallel to the channel direction CH and the slice direction SL.

The photoelectric conversion element 12 has a substantially plate-shaped rectangular parallelepiped shape, converts incident photons into electrical signals, and outputs the electrical signals. The electrical signals are electrical pulse signals corresponding to the individual incident photons. When photon groups are simultaneously incident on the photoelectric conversion element 12, the photoelectric conversion element 12 outputs a pulse signal a wave height of which corresponds to a number of photons configuring the photon group. The photoelectric conversion element 12 is a semiconductor device suitable for so-called photon counting, and is, for example, a silicon photomultiplier (Si-PM). A silicon photomultiplier is a high-performance semiconductor photon detector that is capable of photon counting (photon counting) measurement, and is also applicable to analogue measurement such as scintillation detection. A silicon photomultiplier is an element in which a large number of pixels of avalanche photodiodes (APD) that operate in the Geiger mode are connected in parallel.

The photoelectric conversion element 12 receives photons emitted from the ceramic scintillator 11, and outputs electrical signals in a pulse form. When intensity of transmission X-rays of an object is sufficiently low, the photon groups according to X-ray energy are released in a scattered state in a time axis direction, in the ceramic scintillator 11. At this time, the photoelectric conversion element 12 outputs, for each X-ray energy, a pulse signal having a wave height corresponding to the magnitude of the X-ray energy in numbers corresponding to a dose of the X-rays having the X-ray energy, in a state dispersed in the time axis direction. Accordingly, if the pulse signals outputted in a fixed time are counted for each wave height, it is possible to know a dose of transmission X-rays of the object for each X-ray energy. If all the pulse signals outputted in a fixed time are counted regardless of wave heights, it is possible to know a dose of all transmission X-rays of the object.

To the photoelectric conversion element 12, conductor patterns (not illustrated) formed on the ceramic substrate 4 are respectively connected. The electrical signals from the photoelectric conversion element 12 are outputted to an external processing device (not illustrated) through these conductor patterns. The electrical signals outputted from the photoelectric conversion element 12 are used in collection of projection data by a photon-counting method.

Here, a detector used in the photon-counting method generally has a very high X-ray detection sensitivity. The detector has high sensitivity, that is, can obtain signals with sufficient S/N, even if the dose of X-rays is low, and a number of photons emitted from the scintillator is small. However, when the dose of X-rays is large, the pulse signals are superimposed, a phenomenon called pile-up (pile up) occurs, and it becomes impossible to resolve the signals in the time axis direction.

Among the photon counting methods, in the case of the indirect type, there is a problem of counting rate as in the case of the direct type. The counting rate indicates the number of incident X-ray photons per unit area per unit time. In order to realize imaging by a photon-counting type X-ray detector, a detector handling with a high counting rate is necessary. For example, a counting rate required in X-ray CT equipment is 10⁸ [cps/mm²] or more. This means that X-ray photons are incident on an area of 1 [mm²] at an average interval of 10 [nsec]. At present, a scintillator capable of handling with such a high counting rate has not been put into practical use. If the counting rate exceeds a capacity of the scintillator, pile-up occurs, and it becomes difficult to measure correct photon energy. On the other hand, suppressing the counting rate and performing measurement for a long time causes problems such as a decrease in throughput and a decrease in time resolution.

The counting rate of a scintillator is mainly determined by a response speed of the material. Therefore, there is an urgent need to develop materials for scintillators with improved response speeds so as not to cause pile-up while avoiding long-time measurements.

### (Ceramic Scintillator and Manufacturing Method Thereof)

A main factor that determines the response speed of the indirect type is a decay time constant of light emission of a scintillator. In order to realize the aforementioned counting rate 10⁸ [cps/mm²], control of the decay time constant of light emission of the scintillator becomes particularly important, and it is preferable that the decay time constant of light emission is about 17 [nsec] or less. By making the decay time constant of light emission 17 [nsec] or less, it becomes possible to prevent pile-up and realize imaging at a practical level as described above. Thus, experiments were conducted with an aim of setting the decay time constant of light emission of the scintillator to about 17 [nsec] or less. As a result, it was found that a light yield of 10000 [ph/MeV] or more is good. This is because if the light yield is 10000 [ph/MeV] or more, there is no problem in both the S/N ratio and the energy resolution, and a detector with higher accuracy can be obtained.

In other words, it is desirable that the decay time constant is 17 [nsec] or less and the light yield is 10000 [ph/MeV] or more. For this purpose, a fluorescent material of the ceramic scintillator 11 that is applied as the light conversion element is formed of a garnet compound having a composition. The fluorescent material of the ceramic scintillator 11 satisfies the following condition 1.

Condition 1: An absorption rate at a wavelength of 320 [nm] relative to an absorption rate at a wavelength of 280 [nm] is 0.15 or less.
Here, the decay time constant is defined as a time it takes for the light emission intensity to decrease to 1/e (=0.3679) of a maximum light emission intensity when a time at which a light emission intensity generated by radiating radiation of a short-time pulse becomes maximum is zero. For example, a change with time of the light emission intensity is recorded by performing time-correlated signal photon counting method (Time-Correlated Single Photon Counting: TCSPC) using a pulsed X-ray tube, and the decay time constant can be calculated from a numeric value thereof. Furthermore, the absorption rate is an absorption rate of the absorption spectrum measured by absorption spectroscopy. Condition 1 above is expressed as the ratio of the absorption rate at a wavelength of 320 nm, which is the peak emission wavelength, to the absorption rate at a wavelength of 280 nm, which has a relatively high absorption rate in the absorption spectrum of each fluorescent material.

Furthermore, it is further preferable that the ceramic scintillator 11 has a garnet compound whose composition formula is represented by R₃M₅O₁₂ and satisfies the following condition 2 or 3.

Condition 2: The element R in the composition includes Pr and at least one of Y, La, Ce, Pr, Nd, Sm, Eu, Gd, Tb, Dy, Ho, Er, Tm, Yb, and Lu, and the element M in the composition includes Al and Ga.

Condition 3: The element R in the composition includes Pr, and the element M in the composition includes Al and Ga, and at least one of Sc, Si, Ge, and Sn.

Subsequently, results of producing fluorescent materials according to examples having the compositions that satisfy the above-described condition 1, and fluorescent materials according to comparative examples that do not satisfy the above-described condition 1, and investigating the characteristics of the light yield and the decay time constant of light emission will be described. The fluorescent materials according to the examples, and the fluorescent materials according to the comparative examples are produced through the following steps.

First, in a first step, a powder of a mixture of an oxide of an element R and an oxide of an element M is filled into an alumina container and mixed. In a second step, the mixed powder is fired at a temperature of 1300[°C] or higher. In a third step, the product obtained by the second step is filled into an alumina container and fired at a temperature of 1200[°C] or higher in a nitrogen/hydrogen mixed atmosphere. In a fourth step, the product obtained by the third step is molded. In a fifth step, a ceramic scintillator is manufactured by sintering the product obtained by the fourth step.

Sintering is done in one step. By performing sintering in one step, unlike the case of performing sintering in two steps or more, it is possible to obtain a ceramic scintillator that has little deviation in composition and good crystallinity, and has a small decay time constant because it can suppress volatilization of Ga.

The fluorescent materials comprise elements contained in the above-described composition, and do not contain any other elements except for unavoidable impurities. This is because the decay time constant of light emission changes depending on the contained elements, and therefore when a large amount of impurities is contained, the decay time constant of light emission may increase. Impurities of 100 ppm or more may be included as long as they comply with the required light yield and/or the required decay time constant of light emission. Here, when Si functions as a sintering aid, it remains as an impurity in grain boundaries of the ceramic scintillator as a finished product. Therefore, when Si remains in the grain boundaries, it can be determined that Si is added as a sintering aid, and when Si is present in a base material, it can be determined that it is added as a raw material. In the ceramic scintillator according to the embodiment, Sn, Si, Ge, or a compound containing at least one of them are not present in the grain boundaries except when several tens ppm of them are present as impurities, which means a garnet compound containing Si, Ge, or Sn in the base material.

### (The Above-described Conditions 1 to 3)

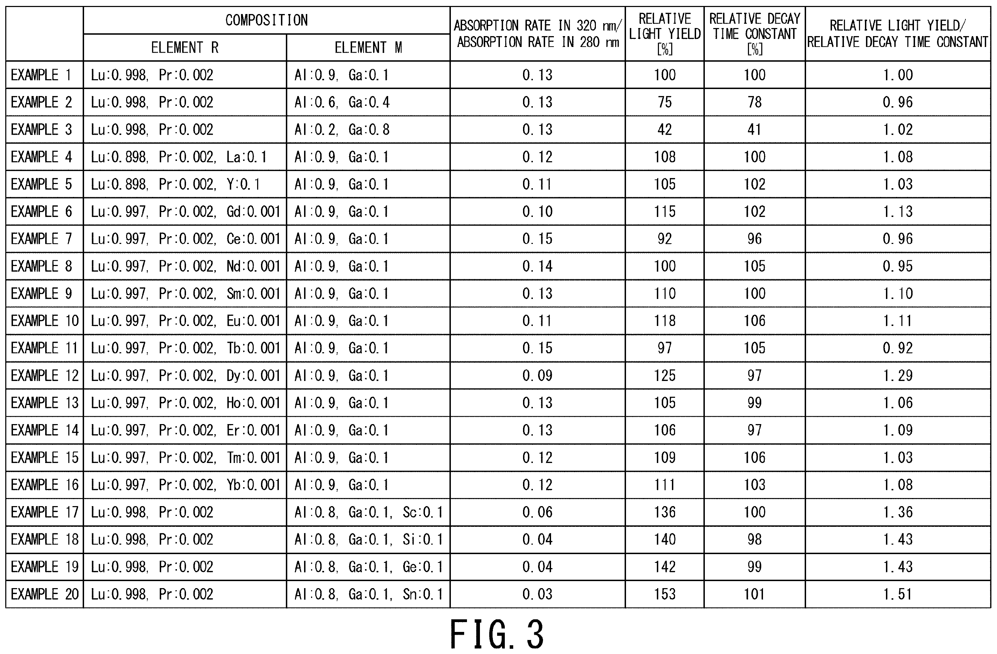

The relationship between the absorption rate at a wavelength of 320 [nm] relative to the absorption rate at a wavelength of 280 [nm] ("absorption rate at 320 nm" / "absorption rate at 280 nm") and the relative light yield relative to the relative decay time constant ("relative light yield" / "relative decay time constant") for the types of elements R and M in the composition of the garnet compound is explained using FIGS. 3 to 5. Here, the relative light yield refers to the percentage of the light yield when the light yield in Example 1 is set as the reference (100). Furthermore, the relative decay time constant refers to the percentage of the decay time constant when the luminescence intensity in Example 1 is set as the reference (100).

FIG. 3 will be described. FIG. 3 shows Examples 1 to 16 in which the elements R and M in the composition satisfy the above-mentioned condition 2, and Examples 17 to 20 in which the elements R and M in the composition satisfy the above-mentioned condition 3. For example, Example 1 shows a garnet compound containing Lu and Pr as the element R in a mass ratio of "0.998 : 0.002", and Al and Ga as the element M in a mass ratio of "0.9 : 0.1". Examples 1 to 20 satisfy condition 1, i.e., the "absorption rate at 320 nm" / "absorption rate at 280 nm" is 0.15 or less. Generally, there is a trade-off between the luminescence decay time constant and the light yield, so whether the characteristics are excellent or not is determined based on the relative light yield relative to the relative decay time constant ("relative light yield" / "relative decay time constant"). In Examples 1 to 20, the "relative light yield" / "relative decay time constant" is 0.9 or more. In this case, the decay time constant is approximately 17 [nsec] or less, and the light yield is 10,000 [ph/MeV] or more, which falls within the preferable range of characteristics. Comparing Examples 17 to 20, when element M contains a tetravalent element (Examples 18 to 20), the "absorption rate at 320 nm" / "absorption rate at 280 nm" is smaller, and the "relative light Yield" / "relative decay time constant" is larger than when element M does not contain a tetravalent element (Example 17). In other words, it is preferable that element M contains a tetravalent element.

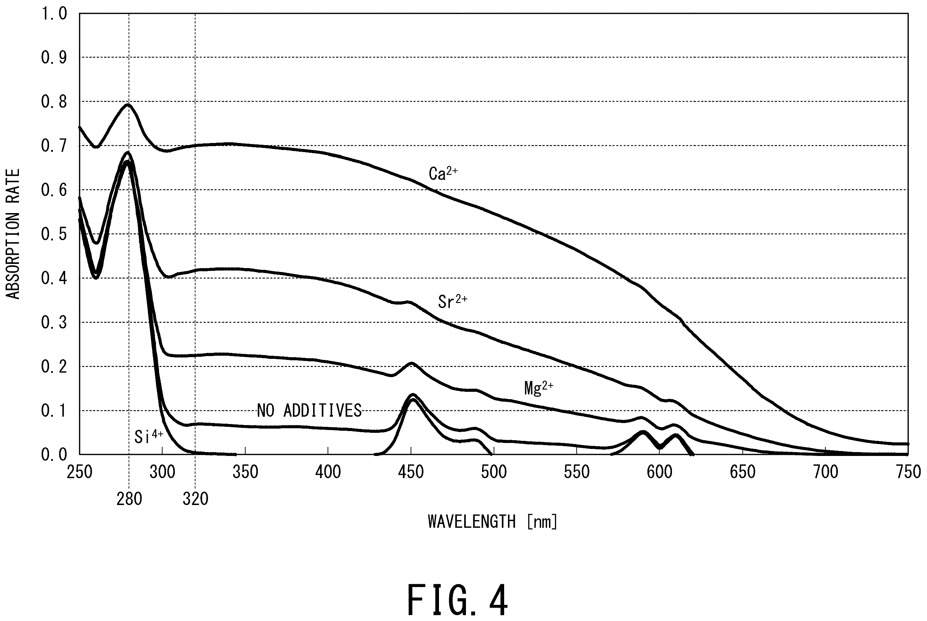

In the condition 3, the element M in the composition may contain one or more of the tetravalent elements Si, Ge, and Sn. Of the luminescent elements Pr, Pr³⁺ emits light, while Pr⁴⁺ absorbs visible light without emitting light. Therefore, the presence of Pr⁴⁺ causes a decrease in the light yield and decay time constant characteristics of the scintillator. Because Pr replaces Lu³⁺, the majority of Pr is Pr³⁺, but there is a problem that traces of Pr⁴⁺ remain. Here, when a divalent element is added, Pr tends to become tetravalent to maintain charge balance, which increases the absorption rate at a wavelength of 320 [nm] (Ca²⁺, Sr²⁺, Mg²⁺ shown in FIG. 4), further decreasing the light yield and decay time constant characteristics of the scintillator. On the other hand, when a tetravalent element is added, Pr tends to become trivalent in order to maintain charge balance, which reduces the absorption rate at a wavelength of 320 [nm] (Si⁴⁺ shown in FIG. 4, as well as Ge⁴⁺ and Sn⁴⁺), suppressing the remaining Pr⁴⁺ and stabilizing Pr³⁺, thereby improving characteristics. However, the element M in the composition is not limited to containing a tetravalent element.

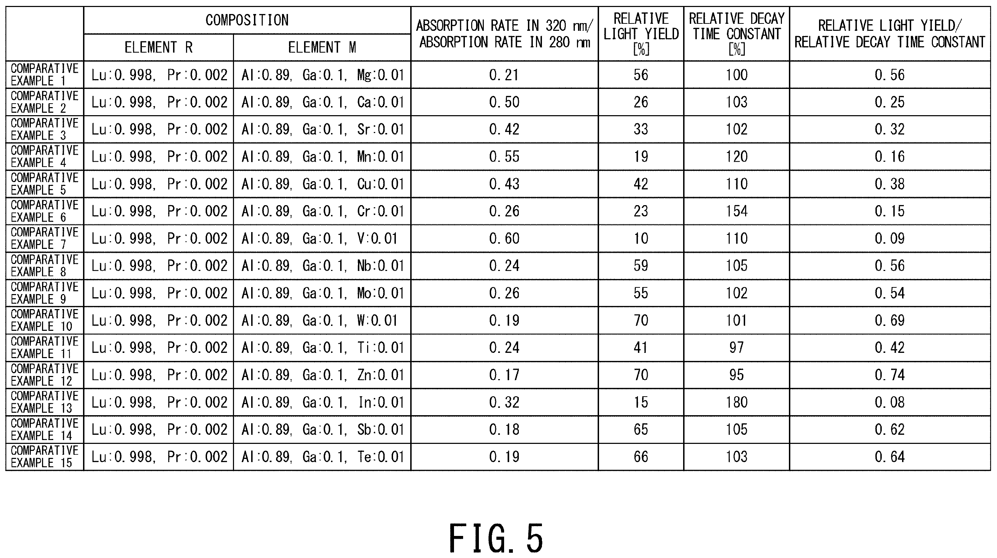

FIG. 5 will be described. FIG. 5 shows Comparative Examples 1 to 15 in which the elements R and M in the composition do not satisfy either condition 2 or condition 3 (Comparative Examples 1 to 15 do not satisfy condition 2 because the element M contains elements other than Al and Ga). In Comparative Examples 1 to 15, the "absorption rate at 320 nm" / "absorption rate at 280 nm" is 0.17 or more. In Comparative Examples 1 to 15, condition 1 is not satisfied either, that is, the "relative light yield" / "relative decay time constant" is less than 0.90. In this case, it is difficult for the characteristics to fall within the preferred range.

According to the ceramic scintillator formed of the garnet compound containing Pr described above, it is possible to provide a fluorescent material with a small decay time constant of light emission. By applying the fluorescent material as a ceramic scintillator of an X-ray detector for a medical application, it is also possible to handle with required reactivity.

According to at least one embodiment described above, it is possible to provide a ceramic scintillator that can handle with a high counting rate, a photon-counting type X-ray detector equipped with it, and a method for manufacturing the ceramic scintillator.

The ceramic scintillator 11 is not limited to the case of being applied to a photon-counting type X-ray detector equipped with a silicon photomultiplier, in X-ray CT equipment. For example, the ceramic scintillator 11 may be applied to an X-ray detector equipped with photodiode, in X-ray CT equipment. The ceramic scintillator 11 may also be applied to a flat panel detector (FPD: Flat Panel Detector) equipped with CMOS (Complementary Metal Oxide Semiconductor). The ceramic scintillator 11 may be applied to a photon-counting type detector equipped with a silicon photomultiplier, in PET (Positron Emission Tomography) equipment. The ceramic scintillator 11 may be applied to imaging for industrial applications such as baggage inspection, and a nondestructive inspection.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A ceramic scintillator formed of a garnet compound containing Pr, wherein an absorption rate at a wavelength of 320 [nm] relative to an absorption rate at a wavelength of 280 [nm] is 0.15 or less.

2. The ceramic scintillator according to claim 1, wherein
a composition formula of a garnet compound is represented by R₃M₅O₁₂,
an element R in the composition of the garnet compound includes Pr and at least one of Y, La, Ce, Pr, Nd, Sm, Eu, Gd, Tb, Dy, Ho, Er, Tm, Yb, and Lu, and
an element M in the composition includes Al and Ga.

3. The ceramic scintillator according to claim 1, wherein
a composition formula of a garnet compound is represented by R₃M₅O₁₂,
an element R in the composition of the garnet compound includes Pr, and
an element M in the composition includes Al and Ga, and at least one of Sc, Si, Ge, and Sn.

4. A photon-counting type X-ray detector, comprising:
the ceramic scintillator according to any one of claims 1 to 3; and
a silicon photomultiplier.

5. A method for manufacturing the ceramic scintillator according to any one of claims 1 to 3, comprising:
a first step of filling an alumina container with a mixture of oxide powders of elements R and M in the composition formula R₃M₅O₁₂ of the garnet compound, and mixing the mixture;
a second step of firing the mixed mixture at a temperature of 1300°C or higher;
a third step of filling an alumina container with a product obtained by the second step, and firing the product at a temperature of 1200°C or higher in a nitrogen/hydrogen mixed atmosphere;
a fourth step of molding a product obtained by the third step; and
a fifth step of sintering a product obtained by the fourth step to manufacture the ceramic scintillator.
